# EUROPÄISCHE PATENTSCHRIFT

(11) **EP 2 722 685 B1**
(45) Veröffentlichungstag und Bekanntmachung des Hinweises auf die Patenterteilung: **14.11.2018**
(21) Anmeldenummer: 13187738.3
(22) Anmeldetag: 08.10.2013
(51) Int. Cl.: G01S 13/90

(54) **SYNTHETIK-APERTUR-RADARVERFAHREN**
SYNTHETICS APERTURE RADAR METHOD
PROCÉDÉ DE RADAR À OUVERTURE SYNTHÉTIQUE

(30) Priorität: 22.10.2012 DE 102012219225
(43) Veröffentlichungstag der Anmeldung: 23.04.2014
(73) Patentinhaber: Deutsches Zentrum für Luft- und Raumfahrt e.V., 51147 Köln (DE)
(72) Erfinder: Villano, Michelangelo, 81241 München (DE); Krieger, Gerhard, 82131 Gauting (DE); Moreira, Alberto, 82140 Olching (DE)
(74) Vertreter: Fink Numrich Patentanwälte PartmbB

(56) Entgegenhaltungen:
- DE-A1-102006 033 922
- DE-B3-102007 041 373
- LOMBARDO P ET AL: "An alternating transmit approach for STAP with short antenna arrays", RADAR CONFERENCE, 2004. PROCEEDINGS OF THE IEEE PHILADELPHIA, PA, USA APRIL 26-29, 2004, PISCATAWAY, NJ, USA,IEEE, 26. April 2004 (2004-04-26), Seiten 420-425, XP010711565, DOI: 10.1109/NRC.2004.1316461 ISBN: 978-0-7803-8234-3
- Michelangelo Villano ET AL: "STAGGERED-SAR: A NEW CONCEPT FOR HIGH-RESOLUTION WIDE-SWATH IMAGING", , 4 June 2012 (2012-06-04), XP055282714, Retrieved from the Internet: URL:http://elib.dlr.de/75767/1/villano_IEE EGOLD2012.pdf [retrieved on 2016-06-22]
- G Krieger ET AL: "The Tandem-L Mission Proposal: Monitoring Earth's Dynamics with High Resolution SAR Interferometry Remote Sensing Technology Institute", , 4 May 2009 (2009-05-04), XP055282732, Retrieved from the Internet: URL:http://ieeexplore.ieee.org/ielx5/49256 55/4976913/04977077.pdf?tp=&arnumber=49770 77&isnumber=4976913 [retrieved on 2016-06-22]

## Beschreibung

Die Erfindung betrifft ein Synthetik-Apertur-Radarverfahren zur Fernerkundung der Erdoberfläche sowie eine entsprechende Synthetik-Apertur-Radarvorrichtung.

Synthetik-Apertur-Radarverfahren, welche auch als SAR-Verfahren bezeichnet werden, ermöglichen die Fernerkundung der Erdoberfläche über die Erfassung von an der Erdoberfläche reflektierten Radarpulsen, die von einem Radarsystem ausgesendet werden, welches sich auf einer Plattform mit konstanter Geschwindigkeit über der Erdoberfläche in einer sog. Azimut-Richtung bewegt. Der Begriff der Erdoberfläche ist dabei weit zu verstehen und kann gegebenenfalls auch die Oberfläche eines anderen Planeten als der Erde betreffen.

Bei SAR-Radarverfahren macht man sich die Erkenntnis zunutze, dass aufgrund der bewegten Plattform die gleichen Bereiche der Erde bzw. eines Planeten in unterschiedlichen Positionen erfasst werden, wodurch eine Amplituden- und Phaseninformation und schließlich ein Radarbild der Erdoberfläche erhalten werden kann. Es wird somit eine synthetische Apertur in Azimut-Richtung erzeugt, wobei hier und im Folgenden unter Apertur immer die Apertur in Azimut-Richtung zu verstehen ist, sofern nichts Gegenteiliges ausgeführt wird.

In einem Einzel-Apertur-Radarsystem wird ein Empfänger an einer einzelnen Azimut-Position zur Erfassung des Radarechos zu jeweiligen Empfangszeitpunkten genutzt. Dabei ist es nachteilhaft, dass die Breite des über das Radarsystem erfassbaren Streifens auf der Erdoberfläche in Richtung senkrecht zur Azimut-Richtung begrenzt ist. Dies liegt daran, dass sog. blinde Bereiche (eng. blind ranges) auftreten, für welche der Empfang eines Radarechos nicht möglich ist, da zum Empfangszeitpunkt des Radarechos gerade ein neuer Radarpuls ausgesendet wird.

Zur Erhöhung der Auflösung von SAR-Radarsystemen ist die Verwendung von sog. Multi-Apertur-Systemen bekannt, bei denen die Radarechos durch mehrere Empfänger an verschiedenen Azimut-Positionen gleichzeitig erfasst werden. In dem Dokument DE 10 2007 041 373 B3 ist ein Multi-Apertur-Radarverfahren beschrieben, bei dem zur Erreichung einer gleichmäßigen Abtastung in Flugrichtung des Systems die Phasenzentren des Sendeantennensystems und/oder des Empfangsantennensystems in der Azimut-Richtung von Puls zu Puls variiert werden. Multi-Apertur-Radarsysteme weisen den Nachteil auf, dass sie komplex aufgebaut sind und eine lange Antenne in Azimut-Richtung zum Aussenden und Empfangen der Radarpulse benötigen.

In dem Dokument WO 2007/076824 A2 ist ein SAR-Radarsystem mit einer einzelnen Apertur in Azimut-Richtung offenbart, bei dem die Radarpulse in ungleichmäßigen Zeitabständen ausgesendet werden und über mehrere Empfangsantennenkeulen in Elevation empfangen werden. Hierdurch kann der auf der Erdoberfläche erfasste Streifen in Richtung senkrecht zur Azimut-Richtung vergrößert werden, wobei eine Radarantenne mit einer kurzen Länge in Azimut-Richtung verwendet werden kann. Durch die Variation der Sendezeitpunkte der Radarpulse wird jedoch die Qualität des Radarbilds verschlechtert.

Die Druckschrift P. Lombardo et al.: "An Alternating Transmit Approach for STAP with Short Antenna Arrays", Radar Conference, 2004, Proceedings of the IEEE, Philadelphia, USA, 26.-29. April 2004, Seiten 420 bis 425, offenbart ein Synthetik-Apertur-Radarverfahren, bei dem die Sendepositionen von Radarpulsen variiert werden. Durch geeignete Wahl der Pulswiederholrate kann dabei erreicht werden, dass zu unterschiedlichen Zeitpunkten erfasste Phasenzentren an der gleichen räumlichen Position liegen.

In der Druckschrift DE 10 2006 033 922 A1 ist ein Synthetik-Apertur-Radarsystem beschrieben, bei dem eine SAR-Gruppenantenne mit mehreren Empfängern durch zeitliche Variation der Empfangspositionen eines Empfängers nachgebildet wird.

Das Dokument DE 10 2007 041 373 B3 offenbart ein Multi-Apertur-Radarsystem, bei dem die Position des effektiven Azimut-Phasenzentrums kontinuierlich derart variiert wird, dass sich für die bestehende Pulswiederholfrequenz eine annähernd äquidistante Abtastung entlang der Azimut-Richtung ergibt.

Die Druckschrift Michelangelo Villano ET AL: "STAGGERED-SAR: A NEW CONCEPT FOR HIGH-RESOLUTION WIDE-SWATH IMAGING", 4. Juni 2012, zeigt ein Einzel-Apertur-SAR-System, in dem die Pulswiederholrate der ausgesendeten Radarpulse variiert wird.

Die Druckschrift G Krieger ET AL: "The Tandem-L Mission Proposal: Monitoring Earth's Dynamics with High Resolution SAR Interferometry Remote Sensing Technology Institute", 4. Mai 2009, gibt einen Überblick über das SAR-Radarsystem der Satellitenmission Tandem-L. Unter anderem wird in diesem Dokument vorgeschlagen, blinde Bereiche in den über das Radarsystem erfassten Streifen auf der Erdoberfläche zu vermeiden, indem die Pulswiederholrate der ausgesendeten Radarpulse variiert wird.

Aufgabe der Erfindung ist es, ein Synthetik-Apertur-Radarverfahren und eine entsprechende Radarvorrichtung zu schaffen, welche mit einem einfachen Aufbau eine hochauflösende Erfassung der Erdoberfläche ermöglichen.

Diese Aufgabe wird durch das Verfahren gemäß Patentanspruch 1 bzw. die Vorrichtung gemäß Patentanspruch 12 gelöst. Weiterbildungen der Erfindung sind in den abhängigen Ansprüchen definiert.

Das erfindungsgemäße Synthetik-Apertur-Radarverfahren dient zur Fernerkundung der Erdoberfläche über ein Einzel-Apertur-Radarsystem auf einer Plattform, die sich in eine Azimut-Richtung über der Erdoberfläche bewegt. Die Plattform kann insbesondere einen Satelliten darstellen. Gegebenenfalls können in dem Radarverfahren auch mehrere Einzel-Apertur-Radarsysteme verwendet werden, wobei alle oder zumindest einer Teil dieser Radarsysteme nach dem nachfolgend beschriebenen erfindungsgemäßen Prinzip arbeiten. Das Einzel-Apertur-Radarsystem erfasst die Erdoberfläche basierend auf einer einzelnen Apertur in Azimut-Richtung unter Verwendung einer kombinierten Sende- und Empfangseinrichtung, welche im Sendebetrieb eine Sendeeinrichtung und im Empfangsbetrieb eine Empfangseinrichtung darstellt. Die Sende- und Empfangseinrichtung kann somit nicht gleichzeitig Radarpulse aussenden und entsprechende Radarechos empfangen.

In dem erfindungsgemäßen Verfahren wird durch die Sendeeinrichtung zu aufeinander folgenden Sendezeitpunkten jeweils von einem (einzelnen) Sendeort mit einer einzelnen relativen Sendeposition in Azimut-Richtung in Bezug zur Plattform ein Radarpuls ausgesendet, wobei die Zeitintervalle zwischen aufeinander folgenden Sendezeitpunkten variieren. Der Begriff des Sendeorts und auch des weiter unten genannten Empfangsorts ist dabei weit zu verstehen und nicht auf einen punktförmigen Bereich beschränkt. Entscheidend ist jedoch, dass der Sendeort bzw. Empfangsort nur eine einzelne Position bzw. Koordinate in Azimut-Richtung aufweist. Erfindungsgemäß werden die Radarechos der an der Erdoberfläche reflektierten Radarpulse durch die Empfangseinrichtung für jeweilige Empfangszeitpunkte an einem (einzelnen) Empfangsort mit einer einzelnen relativen Empfangsposition in Azimut-Richtung in Bezug zur Plattform gleichzeitig über mehrere Empfangskeulen mit unterschiedlichen Elevationswinkeln empfangen. Der gängige Begriff des Elevationswinkels bezeichnet dabei den Höhenwinkel in der Ebene senkrecht zur Azimut-Richtung. Die Empfangskeulen erstrecken sich somit in einer gemeinsamen Ebene senkrecht zur Azimut-Richtung mit jeweils unterschiedlichen Elevationswinkeln. Auf diese Weise werden getrennte Radarechos aus unterschiedlichen Elevationsrichtungen zu einem jeweiligen Empfangszeitpunkt gleichzeitig über entsprechende Empfangskeulen erfasst, wodurch Mehrdeutigkeiten der empfangenen Radarechos in Range-Richtung aufgelöst werden. Mit anderen Worten werden mehrere Sub-Aperturen in Elevation ausgebildet, die insgesamt eine einzelne Apertur in Azimut-Richtung darstellen.

Basierend auf den empfangenen Radarechos werden Abtastungen erhalten, welchen jeweils eine Azimut-Position in Azimut-Richtung und einer sog. Range-Position in einer Range-Richtung zugeordnet sind. Die Range-Richtung ist dabei die Richtung entlang der Erdoberfläche senkrecht zur Azimut-Richtung. Die einer jeweiligen Abtastung zugewiesene Azimut-Position ist eine effektive Azimut-Position, welche sich aus dem geometrischen Mittelpunkt zwischen der (absoluten) Sendeposition des Radarpulses in Azimut-Richtung und der (absoluten) Empfangsposition des Radarechos des Radarpulses in Azimut-Richtung ergibt. Basierend auf den erhaltenen Abtastungen, welche das Ergebnis des Anspruchs 1 darstellen, kann dann über ein an sich bekanntes nachgeschaltetes Auswerteverfahren ein Radarbild der Erdoberfläche ermittelt werden. Die Bestimmung des Radarbilds kann z.B. in einer Bodenstation erfolgen, an welche die Radardaten von der Plattform übertragen werden.

Das erfindungsgemäße Verfahren zeichnet sich dadurch aus, dass die relativen Sendepositionen und/oder relativen Empfangspositionen in der Azimut-Richtung variiert werden, so dass die relativen Sendepositionen in der Azimut-Richtung (d.h. die jeweiligen relativen Azimut-Koordinaten der Sendeorte in Bezug zur Plattform) für unterschiedliche Radarpulse zumindest teilweise verschieden sind und/oder die relativen Empfangspositionen in der Azimut-Richtung (d.h. die jeweiligen relativen Azimut-Koordinaten der Empfangsorte in Bezug zur Plattform) für unterschiedliche Empfangszeitpunkte zumindest teilweise verschieden sind.

Das erfindungsgemäße Verfahren beruht auf der Erkenntnis, dass in einem Einzel-Apertur-Radarsystem mit variierendem Pulswiederholintervall die Qualität der erfassten Daten auf einfache Weise dadurch verbessert werden kann, dass die relativen Sendepositionen bzw. Empfangspositionen variiert werden. Im Unterschied zu einem Multi-Apertur-Radarsystem ist dabei der Aufbau der Radarvorrichtung weniger komplex und insbesondere können kürzere Radarantennen verwendet werden.

Je nach Anwendungsfall kann die Variation der Sendepositionen bzw. Empfangspositionen unterschiedlich ausgestaltet sein. Insbesondere können ausschließlich die relativen Sendepositionen oder ausschließlich die relativen Empfangspositionen oder sowohl die relativen Sendepositionen als auch die relativen Empfangspositionen variiert werden.

Um die Komplexität des Verfahrens zu vereinfachen, wird vorzugsweise eine begrenzte Anzahl von relativen Sendepositionen bzw. Empfangspositionen vorgegeben. Vorzugsweise sind höchstens fünf und insbesondere zwei verschiedene relative Sendepositionen und/oder höchstens fünf und insbesondere zwei verschiedene relative Empfangspositionen vorgegeben.

In einer weiteren Variante der Erfindung wiederholen sich die Sendezeitpunkte der Radarpulse basierend auf einer Periode, für welche vorbestimmte Sendezeitpunkte mit zumindest teilweise verschiedenen Zeitabständen zwischen den Sendezeitpunkten festgelegt sind. Beispielsweise kann die Periode derart ausgestaltet sein, dass der Abstand zwischen den Sendezeitpunkten innerhalb der Periode immer kürzer wird. In einer bevorzugten Variante der Erfindung wird die Variation der relativen Sendepositionen bzw. relativen Empfangspositionen auch basierend auf dieser Periode festgelegt. Das heißt, diese Variation ist für die Radarpulse der sich wiederholenden Periode fest vorgegeben und wiederholt sich von Periode zu Periode.

In einer besonders bevorzugten Ausführungsform sind die relativen Sendepositionen und/oder die relativen Empfangspositionen basierend auf einem Kriterium einer hohen Signalgüte der Abtastungen, insbesondere eines niedrigen ISLR-Verhältnisses der Impuls-Antwort-Funktion und/oder eines niedrigen Rauschens, festgelegt. Die entsprechende Bestimmung der Sendepositionen bzw. Empfangspositionen basierend auf diesem Kriterium liegt im Rahmen von fachmännischem Handeln und kann z.B. über die Durchführung entsprechender Experimente erfolgen. Das ISLR-Verhältnis (ISLR = Integrated Side Lobe Ratio) ist dabei ein an sich bekanntes Maß für die Signalqualität. Als Maß für das Rauschen kann z.B. der hinlänglich bekannte Rausch-Skalierungsfaktor (englisch: Noise Scaling Factor) herangezogen werden.

In einer vorteilhaften Ausführungsform der Erfindung werden die Empfangspositionen für Abtastungen, welche zu Radarechos unterschiedlicher Radarpulse bei gleicher Range-Position gehören und/oder welche zu dem Radarecho des gleichen Radarpulses für verschiedene Range-Positionen gehören, zumindest teilweise unterschiedlich festgelegt. Vorzugsweise werden die relativen Empfangspositionen in Abhängigkeit von den Range-Positionen der Abtastungen derart variiert, dass die Abtastungen aller Range-Positionen eines Radarpulses einen konstanten räumlichen Abstand in der Azimut-Richtung zu den Abtastungen aller Range-Positionen des nächsten Radarpulses aufweisen. Hierdurch enthalten bereits die Rohdaten gleichmäßige räumliche Abtastungen in Azimut-Richtung, so dass auf die Durchführung von Verfahren zur Berechnung einer gleichförmigen Abtastung verzichtet werden kann. Hierdurch wird eine höhere Signalgüte erreicht.

Nichtsdestotrotz können im Falle, dass die Abtastungen in die Azimut-Richtung keinen konstanten räumlichen Abstand aufweisen, hieraus Abtastungen mit konstantem räumlichem Abstand in der Azimut-Richtung berechnet werden. Entsprechende Berechnungsverfahren sind aus dem Stand der Technik bekannt. Insbesondere kann ein Interpolations-Verfahren bzw. eine Multi-Kanal-Rekonstruktion (englisch: Multi Channel Reconstruction) eingesetzt werden.

Zur Realisierung verschiedener relativer Sendepositionen bzw. Empfangspositionen wird in einer besonders bevorzugten Ausgestaltung eine kombinierte Sende- und Empfangseinrichtung in der Form einer sog. Phased-Array-Antenne eingesetzt.

In einer vorteilhaften Ausgestaltung der Erfindung wird die Variation der relativen Sendepositionen und/oder Empfangspositionen durch eine Veränderung des Phasenzentrums der Sendeeinrichtung und/oder der Empfangseinrichtung erreicht. Diese Variante der Erfindung wird vorzugsweise in Kombination mit einer kombinierten Sende- und Empfangseinrichtung in der Form einer Phased-Array-Antenne verwendet.

Neben dem oben beschriebenen Verfahren betrifft die Erfindung ferner eine Synthetik-Apertur-Radarvorrichtung mit einem und gegebenenfalls mehreren Einzel-Apertur-Radarsystemen auf einer Plattform, die sich im Betrieb der Radarvorrichtung in eine Azimut-Richtung über der Erdoberfläche bewegt. Das Einzel-Apertur-Radarsystem umfasst eine kombinierte Sende- und Empfangseinrichtung, welche im Sendebetrieb eine Sendeeinrichtung und im Empfangsbetrieb eine Empfangseinrichtung darstellt. Die Sendeeinrichtung und Empfangseinrichtung sind dabei derart ausgestaltet, dass mit diesen das erfindungsgemäße Verfahren bzw. eine oder mehrere bevorzugte Varianten des erfindungsgemäßen Verfahrens durchführbar sind.

Ausführungsbeispiele der Erfindung werden nachfolgend anhand der beigefügten Figuren detailliert beschrieben.

Es zeigen:
- Fig. 1: eine schematische Darstellung, anhand der das im Rahmen der Erfindung verwendete SAR-Prinzip erläutert wird;
- Fig. 2: ein Diagramm, welches die Entstehung von blinden Bereichen in einem herkömmlichen SAR-Radarsystem verdeutlicht;
- Fig. 3: ein Diagramm, welches die Variation der Sendezeitpunkte von Radarpulsen in einem bekannten SAR-System wiedergibt;
- Fig. 4: ein Diagramm, welches die Auswirkungen der in Fig. 3 gezeigten Variation der Sendezeitpunkte auf die Abtastungen der Radarpulse verdeutlicht;
- Fig. 5: ein Diagramm, welches für eine vorbestimmte Range-Position die Abtastungen in Azimut-Richtung für ein SAR-Radarsystem mit variierenden Sendezeitpunkten zeigt;
- Fig. 6: ein Diagramm, welches die Impuls-Antwort-Funktion für ein SAR-Radarsystem mit variierenden Sendezeitpunkten wiedergibt;
- Fig. 7: eine schematische Darstellung einer ersten Ausführungsform des erfindungsgemäßen Verfahrens;
- Fig. 8 und Fig. 9: Diagramme, welche die Verbesserung der Signalqualität basierend auf der Ausführungsform der Fig. 7 verdeutlichen; und
- Fig. 10: eine schematische Darstellung, welche eine weitere Ausführungsform des erfindungsgemäßen Verfahrens wiedergibt.

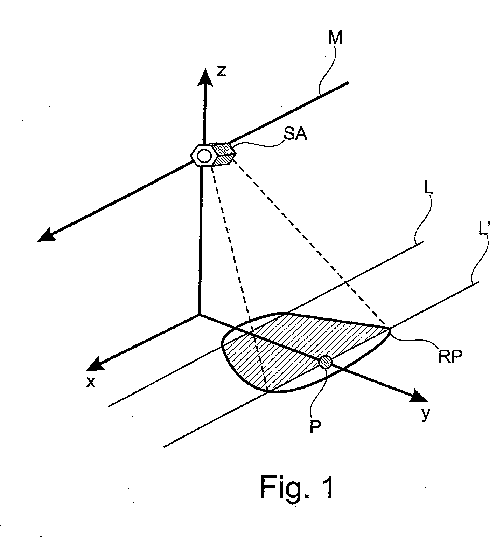

Zum besseren Verständnis wird zunächst anhand von Fig. 1 das Prinzip der SAR-Messung anhand der von einem Satelliten ausgesendeten Radarstrahlung erläutert. Der in Fig. 1 dargestellte Satellit ist mit dem Bezugszeichen SA angedeutet und bewegt sich in Richtung des dargestellten Pfeils M, welcher der x-Richtung des in Fig. 1 wiedergegebenen kartesischen Koordinatensystems entspricht. Diese x-Richtung stellt die Azimut-Richtung dar. Der Satellit SA, dessen Höhe über der Erdoberfläche durch die z-Koordinate des Koordinatensystems repräsentiert wird, sendet während seiner Bewegung kontinuierlich Radarpulse über eine Sendeantenne Tx (nicht aus Fig. 1 ersichtlich) in Richtung zur Erdoberfläche aus, wobei die Kontur eines gerade ausgesendeten Radarpulses auf der Erdoberfläche mit RP bezeichnet ist. Von jedem ausgesendeten Radarpuls wird das Radarecho erfasst, indem die an der Erdoberfläche reflektierte Radarstrahlung in der Range-Richtung y des kartesischen Koordinatensystems mit einem Empfänger Rx (nicht aus Fig. 1 ersichtlich) zeitlich abgetastet wird.

Als Folge erhält man eine Vielzahl von Abtastungen, wobei jede Abtastung dem Radarecho eines bestimmten Radarpulses für eine Range-Position entspricht. Die Zuordnung einer Abtastung zu einem Radarpuls wird dabei durch eine Azimut-Position repräsentiert, welche der geometrische Mittelpunkt zwischen der Azimut-Position des Senders beim Aussenden des Radarpulses und der Azimut-Position des Empfängers beim Empfang des Radarechos ist. Der Sender und der Empfänger sind Bestandteil einer kombinierten Sende- und Empfangsantenne, welche im Sendebetrieb den Sender Tx und im Empfangbetrieb den Empfänger Rx darstellt.

In dem dargestellten Ausführungsbeispiel werden bei der Auswertung nur Informationen der Radarstrahlung zwischen den beiden Linien L und L' erfasst, die einen Abstand von mehreren Kilometern (z.B. 30 km) aufweisen. Dies wird auch durch den schraffierten Bereich angedeutet, der sich mit der Kontur RP der Ausleuchtungszone der Sendeantenne (auch als Fußabdruck bzw. Footprint bezeichnet) überschneidet. Ferner handelt es sich bei dem SAR-System der Fig. 1 um ein sog. Einzel-Apertur-System, bei dem die Radarechos jeweils nur durch einen einzelnen Empfänger, d.h. nicht gleichzeitig durch mehrere Empfänger, erfasst werden.

Das Prinzip der SAR-Messung beruht nunmehr darauf, dass jeweilige Punkte auf der Erdoberfläche mehrfach aus unterschiedlichen Blickwinkeln aufgrund der Bewegung des Satelliten SA erfasst werden. Dies wird in Fig. 1 für den Punkt P verdeutlicht. Dieser Punkt P weist in dem dargestellten Szenario den geringstmöglichen Abstand zum Satelliten SA auf. Durch Bewegung des Satelliten in Richtung M wird dieser Abstand immer größer. Vor Erreichen der in Fig. 1 dargestellten Position wurde dieser Abstand immer kleiner. Aufgrund des Doppler-Effekts kommt es bei der Erfassung des Radarechos zu einer Frequenzverschiebung, die geeignet ausgewertet werden kann, wodurch schließlich für die Punkte der Erdoberfläche, an denen die Radarpulse reflektiert werden, eine Amplituden- und Phaseninformation und somit ein Bildpunkt der Erdoberfläche erhalten wird. Die entsprechende Berechnung von Bildpunkten der Erdoberfläche aus SAR-Daten ist dem Fachmann hinlänglich bekannt und wird deshalb nicht weiter im Detail erläutert. Mit dem SAR-Messverfahren wird durch eine Vielzahl von Radarpulsen eines Radarsenders kleiner Apertur eine größere synthetische Apertur entsprechend der Ausdehnung des Radarpulses auf der Erdoberfläche simuliert.

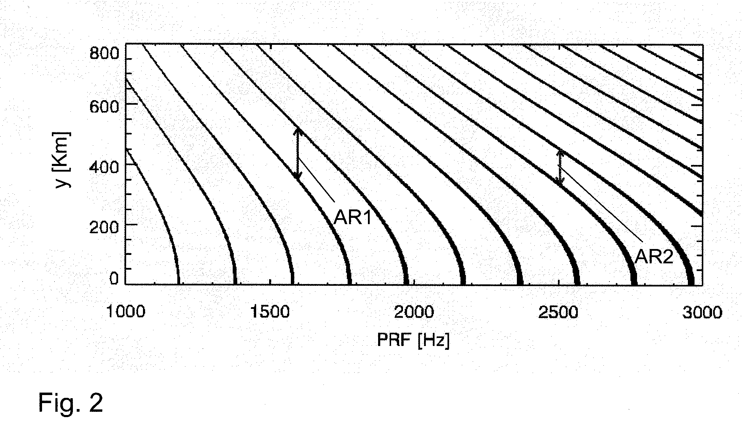

Üblicherweise werden in dem Einzel-Apertur-Radarsystem der Fig. 1 Radarpulse mit einer festen Pulswiederholrate ausgesendet. Dabei besteht das Problem, dass sog. blinde Bereiche in der Range-Richtung ausgebildet werden, für welche das Radarsystem kein Signal erfassen kann, da zum entsprechenden Empfangszeitpunkt gerade ein Radarpuls ausgesendet wird und somit kein Echo empfangen werden kann. Die entsprechenden blinden Bereiche treten somit immer dann auf, wenn die Zeit, die ein ausgesendeter Radarpuls zum Erreichen des blinden Bereichs und zum Zurücklaufen zum Radarsystem benötigt, einem Vielfachen der Zeitdifferenz zwischen dem Aussenden von zwei aufeinander folgenden Pulsen entspricht. Die Positionen der blinden Bereiche hängen folglich von der Pulswiederholrate ab, wobei bei höherer Pulswiederholrate der Abstand zwischen den blinden Bereichen immer geringer wird. Dies wird anhand von Fig. 2 verdeutlicht, welche die Positionen von blinden Bereichen in Range-Richtung y in Abhängigkeit von der Pulswiederholrate PRF wiedergibt. Durch den Pfeil AR1 ist dabei ein Abstand zwischen zwei blinden Bereichen für eine Pulswiederholrate von 1600 Hz und durch den Pfeil AR2 ein Abstand zwischen zwei blinden Bereichen für eine Pulswiederholrate von 2500 Hz wiedergegeben. Man erkennt, dass mit zunehmender Pulswiederholrate der Abstand zwischen blinden Bereichen geringer wird. Um somit mit einem Einzel-Apertur-Radarsystem einen breiten Streifen auf der Erdoberfläche zu erfassen, ist die Pulswiederholrate PRF möglichst klein zu wählen. Dies hat jedoch wiederum den Nachteil, dass hierdurch die Auflösung in Azimut-Richtung aufgrund des Nyquist-Kriteriums immer geringer wird.

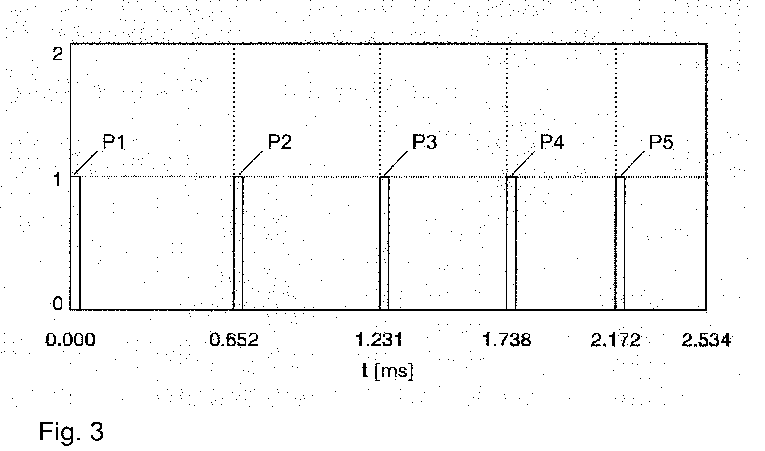

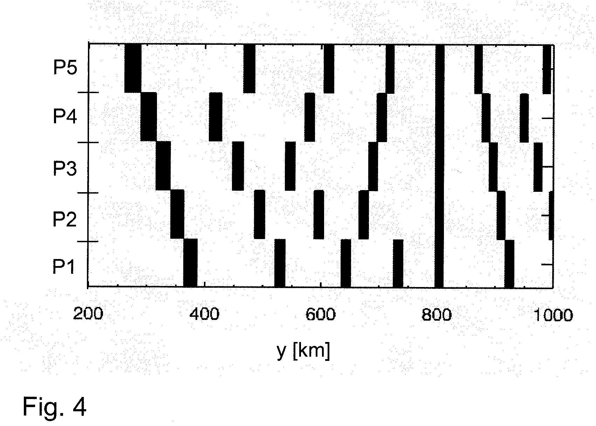

Um eine hohe Auflösung in Azimut-Richtung mit gleichzeitig großem Abstand zwischen den blinden Bereichen zu erreichen, ist es aus dem Stand der Technik bekannt, sog. Multi-Apertur-Radarsysteme zu verwenden, bei denen das Radarsignal gleichzeitig durch mehrere Empfänger mit verschiedenen Azimut-Positionen erfasst wird. Dieses System ist jedoch aufwändig und führt zu einer sehr langen Antenne in Azimut-Richtung. Alternativ können mehrere Streifen gleichzeitig über verschiedene Empfangsantennenkeulen in Elevation aufgenommen werden, wobei zur Vermeidung der blinden Bereiche die Pulswiederholrate variiert wird. Fig. 3 zeigt ein Diagramm, welches eine solche Variation der Pulswiederholrate basierend auf einer vorgegebenen Periode verdeutlicht. Dabei wird für fünf aufeinander folgende Pulse P1, P2, P3, P4 und P5 der zeitliche Abstand zwischen den Radarpulsen schrittweise verkürzt. Auf diese Weise werden die aufeinander folgenden Pulse meist an unterschiedlichen Positionen in der Range-Richtung blockiert, wobei eine Blockierung wiederum durch gleichzeitiges Senden und Empfangen eines Radarpulses hervorgerufen wird. Dies wird in dem Diagramm der Fig. 4 verdeutlicht. Dort sind für Range-Positionen y zwischen 200 und 1000 km Blockierungen der entsprechenden Pulse P1 bis P5 der Sequenz der Fig. 3 durch entsprechende schwarze Balken wiedergegeben. Wie sich aus Fig. 4 ergibt, wird in einem großen Range-Bereich immer nur ein Puls für eine jeweilige Range-Position blockiert. In einem solchen Fall kann mit geeigneter Signalverarbeitung der fehlende Puls rekonstruiert werden. Dies ist bei einem Radarsystem mit konstanter Pulswiederholrate nicht möglich, da hier alle Abtastungen für eine vorbestimmte Range-Position fehlen.

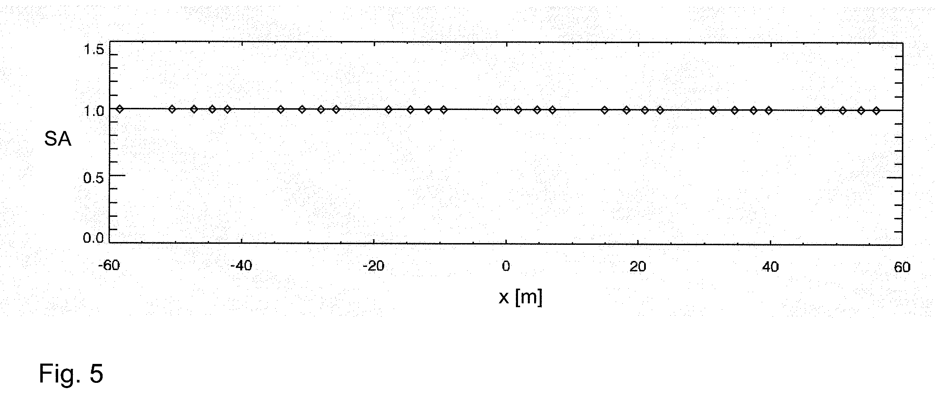

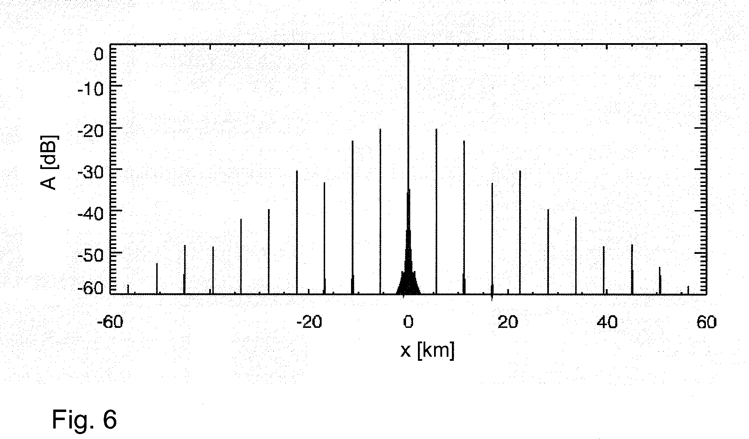

Ein Einzel-Apertur-Radarsystem mit variierender Pulswiederholrate ermöglicht zwar eine hochauflösende Aufnahme eines breiten Streifens auf der Erdoberfläche, weist jedoch den Nachteil auf, dass die Abtastungen der Radarsignale keinen konstanten Abstand aufweisen. Dies wird anhand von Fig. 5 verdeutlicht, welche für eine spezifische Range-Position die Abtastungen SA entlang der Azimut-Richtung x wiedergibt. Aufgrund des variierenden Abstands zwischen aufeinander folgend ausgesendeten Radarpulsen sowie der Blockierung bestimmter Abtastungen entstehen Lücken zwischen den Abtastungen. Dies hat wiederum Auswirkungen auf die Signalqualität der Abtastungen, was aus Fig. 6 deutlich wird.

Fig. 6 zeigt die Amplitude A der Impuls-Antwort-Funktion in Azimut-Richtung x für ein SAR-System mit variierender Pulswiederholrate. Es wurde dabei ein Interpolationsverfahren verwendet, um ein gleichmäßig abgetastetes Signal zu erzeugen. Die Impuls-Antwort-Funktion weist neben der Hauptkeule für x = 0 in deren unmittelbarer Umgebung eine Vielzahl von Nebenkeulen auf, welche in dem Maßstab der Fig. 6 nicht weiter aufgelöst werden können. Die Anzahl bzw. Form der Nebenkeulen unterscheidet sich dabei nicht wesentlich von einem SAR-System mit konstanter Pulswiederholrate. Nichtsdestotrotz treten wesentlich mehr zusätzliche Echos in größeren Abständen von der Hauptkeule auf, als dies bei einem SAR-System mit konstanter Pulswiederholrate der Fall ist. Diese zusätzlichen Radarechos resultieren aus sog. Azimut-Mehrdeutigkeiten (englisch: azimuth ambiguities).

Die Qualität der Signalerfassung des SAR-Systems ist unter anderem durch das ISLR-Verhältnis (ISLR = Integrated Side Lobe Ratio) der Impuls-Antwort-Funktion bestimmt. Dieses Verhältnis gibt das Verhältnis der Energien von allen Nebenkeulen und allen Azimut-Mehrdeutigkeiten relativ zu der Energie der Hauptkeule an. Aufgrund der Vielzahl von zusätzlichen Echos ist die Qualität der Signalerfassung für ein SAR-System mit variabler Pulswiederholrate schlechter als für ein SAR-System mit konstanter Pulswiederholrate. Darüber hinaus wird das Rauschen des Signals durch Algorithmen verstärkt, welche ein gleichmäßig abgetastetes Signal aus dem ungleichmäßig abgetasteten Signal ermitteln (z.B. Interpolation oder Multi-Kanal-Rekonstruktion).

Um die obigen Nachteile einer verschlechterten Signalqualität für ein Einzel-Apertur-Radarsystem mit variabler Pulswiederholrate zu vermeiden, wird erfindungsgemäß vorgeschlagen, die relativen Sendepositionen und/oder Empfangspositionen der Radarpulse in Bezug auf die Plattform, auf der das Radarsystem angeordnet ist, in Azimut-Richtung zu variieren. In einer speziellen Ausführungsform kann dies mit Hilfe einer Sende- und Empfangseinrichtung in der Form einer Phased-Array-Antenne erreicht werden, bei der eingestellt werden kann, welche Antennenelemente des Arrays ein Signal aussenden bzw. empfangen. Die Veränderung der relativen Sendeposition bzw. Empfangsposition beeinflusst dabei nicht die auftretenden blockierten Pulse. Jedoch kann der räumliche Abstand zwischen den Abtastungen variiert werden. Auf diese Weise können große Abstände zwischen aufeinander folgenden Abtastungen, wie sie in Fig. 5 wiedergegeben sind, verkleinert werden und hierdurch die Signalqualität verbessert werden. Im Vergleich zu einem SAR-Radarsystem mit variabler Pulswiederholrate ohne Veränderung der relativen Sende- bzw. Empfangspositionen ist das Radarsystem zwar etwas komplexer. Jedoch ist es weiterhin wesentlich weniger komplex als die eingangs erwähnten Multi-Apertur-Radarsysteme, bei denen Radarechos durch mehrere Empfänger erfasst werden.

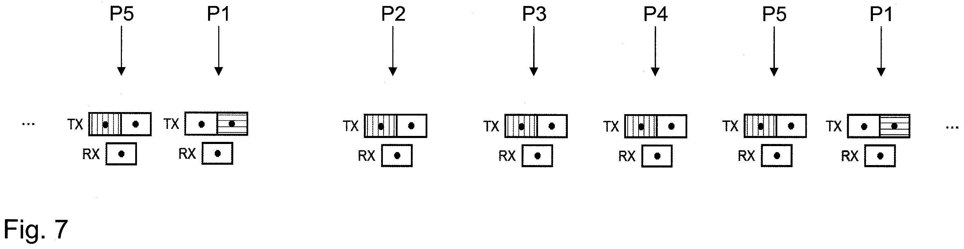

Fig. 7 zeigt in schematischer Darstellung eine erste Ausführungsform eines erfindungsgemäßen SAR-Radarverfahrens. Dabei sind in horizontaler Richtung die entsprechenden Sendezeitpunkte der Pulse P1, P2, P3, P4 und P5 basierend auf der in Fig. 3 gezeigten variablen Pulswiederholfrequenz angedeutet. In der Ausführungsform der Fig. 7 wird ausschließlich die relative Sendeposition des Radarpulses variiert, wohingegen die relative Empfangsposition der Radarpulse konstant bleibt. Der Radarsender ist für die einzelnen Pulse mit Tx und der entsprechende Empfänger mit Rx angedeutet. Für den Sender existieren dabei zwei in Azimut-Richtung zueinander versetzte Sendepositionen, wobei die aktuell für den Puls verwendete Sendeposition durch eine entsprechende Schraffur angedeutet ist. In der Ausführungsform der Fig. 7 wird für die Sequenz der ausgesendeten Radarpulse P1 bis P5 immer für den ersten Radarpuls P1 eine andere Sendeposition als für die weiteren Radarpulse P2 bis P5 verwendet, wobei die relative Sendeposition für diese weiteren Radarpulse immer die gleiche ist. Die Sendeposition für den Puls P1 ist derart in Azimut-Richtung gewählt, dass das entsprechende Radarecho zeitlich um eine Distanz Δt nach vorne versetzt erscheint. Der Parameter Δt kann derart bestimmt werden, dass die Signalqualität der Abtastungen im Hinblick auf das ISLR-Verhältnis bzw. das Rauschen optimiert ist. Die Durchführung einer entsprechenden Optimierung, z.B. basierend auf Experimenten unter Verwendung verschiedener Sendepositionen, liegt im Rahmen von fachmännischem Handeln.

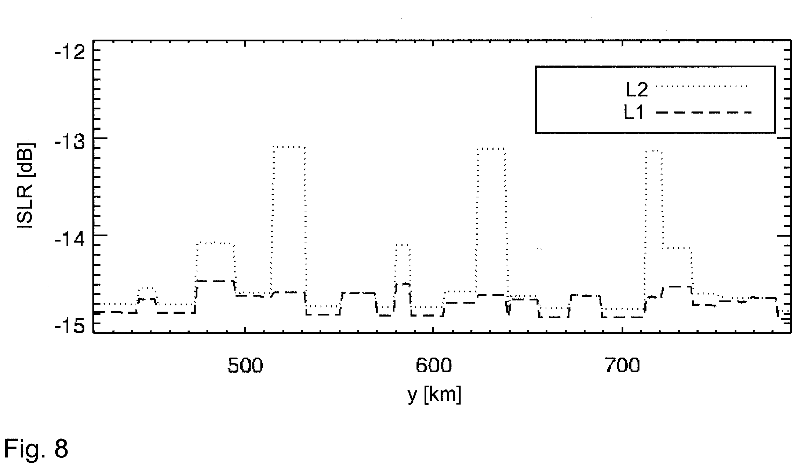

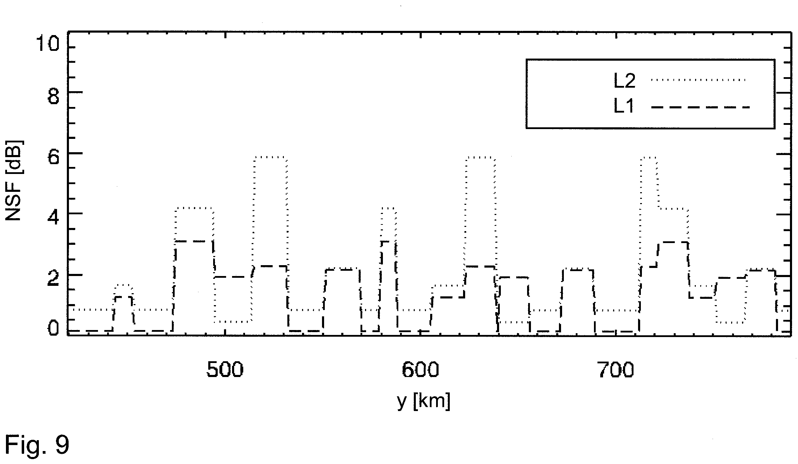

Fig. 8 und Fig. 9 zeigen Diagramme, welche das ISLR-Verhältnis bzw. den Rausch-Skalierungsfaktor für ein SAR-System gemäß der Ausführungsform der Fig. 7 sowie für ein herkömmliches SAR-System mit variierender Pulswiederholrate ohne Variation der Sendepositionen verdeutlichen. Der an sich bekannte Rausch-Skalierungsfaktor ist ein Maß für das Rauschen, wobei das Rauschen umso geringer ist, je kleiner dieser Faktor ist. In Fig. 8 ist das ISLR-Verhältnis für verschiedene Range-Positionen wiedergegeben, wobei die gestrichelte Linie L1 das erfindungsgemäße SAR-System und die gepunktete Linie das herkömmliche SAR-System repräsentiert. Man erkennt, dass das ISLR-Verhältnis im erfindungsgemäßen SAR-System deutlich verbessert ist. Fig. 9 zeigt demgegenüber den Rausch-Skalierungsfaktor NSF, wobei wiederum mit gestrichelter Linie das erfindungsgemäße SAR-System und mit gepunkteter Linie das herkömmliche SAR-System dargestellt ist. Man erkennt auch für den Rausch-Skalierungsfaktor eine deutliche Verbesserung. Die Diagramme der Fig. 8 und Fig. 9 wurden unter Verwendung eines Multi-Kanal-Rekonstruktion bestimmt, welche ein gleichförmig abgetastetes Azimut-Signal berechnet.

Wie im Vorangegangenen erläutert wurde, wird in einem Einzel-Apertur-Radarsystem mit variierender Pulswiederholrate eine Abtastung in Azimut-Richtung in ungleichmäßigen räumlichen Abständen erhalten, da das Zeitintervall zwischen aufeinander folgend ausgesendeten Radarpulsen nicht konstant ist und einige Pulse blockiert werden. Andererseits kann durch eine versetzte Sendeposition bzw. Empfangsposition der effektive Ort einer Abtastung in Azimut-Richtung variiert werden. In der nachfolgend beschriebenen Ausführungsform wird dabei ein Radarsystem betrachtet, bei dem die relative Sendeposition fest ist und die relativen Empfangspositionen in Azimut-Richtung von einem Radarpuls zum nächsten sowie auch für die Abtastungen des gleichen Radarpulses bei unterschiedlichen Range-Positionen variiert werden. Hierdurch kann ein gleichförmig abgetastetes Signal in Azimut-Richtung erhalten werden. In einem solchen Fall werden auch keine Rekonstruktions-Algorithmen mehr benötigt, um ein gleichförmig abgetastetes Signal zu berechnen, so dass die Performanz des Verfahrens in Bezug auf Rauschen und ISLR-Verhältnis weiter verbessert wird.

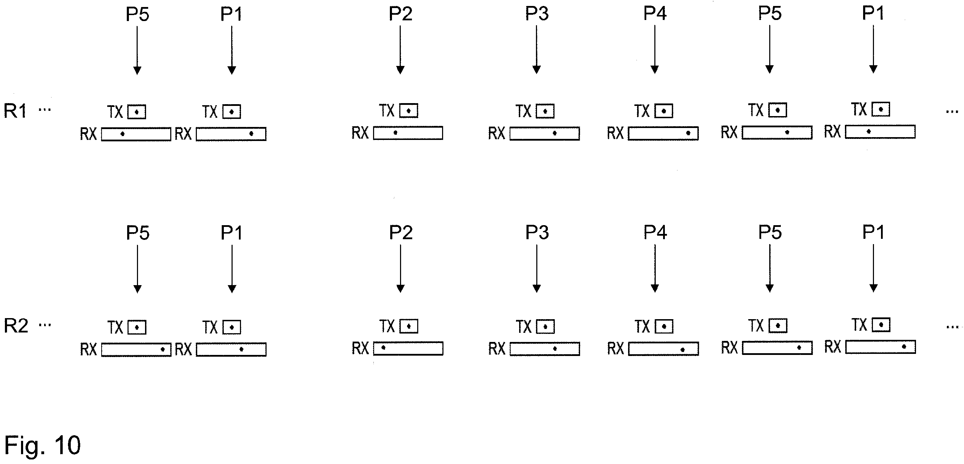

Fig. 10 ist eine schematische Darstellung einer solchen Ausführungsform, wobei wiederum die entsprechenden Pulse der Pulssequenz der Fig. 3 mit P1, P2, P3, P4 und P5 bezeichnet sind. Die Sender bzw. Empfänger mit den entsprechenden Sende- und Empfangspositionen sind mit Tx bzw. Rx bezeichnet. In Fig. 10 sind ferner für zwei unterschiedliche Range-Positionen R1 und R2 die entsprechenden Sende- und Empfangspositionen der jeweiligen Pulse angedeutet. Wie sich aus Fig. 10 ergibt, ist die relative Sendeposition auf der Plattform für alle Pulse P1 bis P5 unverändert. Demgegenüber variiert die Empfangsposition des entsprechenden Empfängers, wie durch einen Balken mit einem darin wiedergegebenen Punkt angedeutet wird, wobei der Punkt die entsprechende Empfangsposition in Azimut-Richtung wiedergibt. Wie man aus Fig. 10 erkennt, variiert die Empfangsposition nicht nur von einem Puls zum anderen, sondern auch unterschiedliche Range Positionen eines jeweiligen Pulses. Auf diese Weise kann gewährleistet werden, dass gleichmäßige Abtastungen in Azimut-Richtung für alle Range-Positionen erhalten werden. Betrachtet man beispielsweise die Range-Position von 600 km basierend auf dem Diagramm der Fig. 4, ist immer der zweite Puls P2 blockiert. Die Empfangsposition kann in diesem Fall von einem Puls zu einem nächsten derart variiert werden, dass ein gleichmäßig abgetastetes Signal erhalten wird. Analog kann auch für eine andere Range-Position (z.B. 650 km) verfahren werden, bei der der blockierte Puls ein anderer ist (Puls P1 für y = 600 km), wobei nunmehr die Empfangspositionen unterschiedlich zu der Range-Position bei 600 km gewählt werden, jedoch wiederum derart, dass ein gleichmäßig abgetastetes Signal in Azimut-Richtung erhalten wird.

Die im Vorangegangenen beschriebenen Ausführungsformen des erfindungsgemäßen Synthetik-Apertur-Radarverfahrens weisen eine Reihe von Vorteilen auf. Insbesondere kann mit einem einfach aufgebauten Einzel-Apertur-Radarsystem mit kurzer Antennenlänge ein Bild der Erdoberfläche mit hoher Auflösung und einem breiten Streifen von Abtastungen in Range-Richtung erhalten werden. Darüber hinaus wird die Qualität der erfassten Radarbilder im Vergleich zu einem Einzel-Apertur-Radarsystem mit variabler Pulswiederholrate ohne variierenden Sende- bzw. Empfangspositionen deutlich verbessert.

## Patentansprüche

1. Synthetik-Apertur-Radarverfahren zur Fernerkundung der Erdoberfläche über ein Einzel-Apertur-Radarsystem auf einer Plattform (SA), die sich in eine Azimut-Richtung (x) über der Erdoberfläche bewegt, wobei das Einzel-Apertur-Radarsystem eine kombinierte Sende- und Empfangseinrichtung umfasst, welche im Sendebetrieb eine Sendeeinrichtung (Tx) und im Empfangsbetrieb eine Empfangseinrichtung (Rx) darstellt, wobei:
- durch die Sendeeinrichtung (Tx) zu aufeinander folgenden Sendezeitpunkten jeweils von einem Sendeort mit einer einzelnen relativen Sendeposition in Azimut-Richtung (x) in Bezug zur Plattform (SA) ein Radarpuls (P1, P2, ..., P5) ausgesendet wird, wobei die Zeitintervalle zwischen aufeinander folgenden Sendezeitpunkten variieren;
- die Radarechos der an der Erdoberfläche reflektierten Radarpulse (P1, P2, ..., P5) durch die Empfangseinrichtung (Rx) für jeweilige Empfangszeitpunkte an einem Empfangsort mit einer einzelnen relativen Empfangsposition in Azimut-Richtung (x) in Bezug zur Plattform (SA) gleichzeitig über mehrere Empfangskeulen mit unterschiedlichen Elevationswinkeln empfangen werden, wodurch Abtastungen erhalten werden, wobei eine jeweilige Abtastung einer Azimut-Position in der Azimut-Richtung (x) und einer Range-Position in einer Range-Richtung (y) zugeordnet ist, wobei die Range-Richtung (y) entlang der Erdoberfläche senkrecht zur Azimut-Richtung (x) verläuft;
**dadurch gekennzeichnet, dass**
die relativen Sendepositionen und/oder relativen Empfangspositionen in der Azimut-Richtung (x) variiert werden, so dass die relativen Sendepositionen in der Azimut-Richtung (x) für unterschiedliche Radarpulse (P1, P2, ..., P5) zumindest teilweise verschieden sind und/oder die relativen Empfangspositionen in der Azimut-Richtung (x) für unterschiedliche Empfangszeitpunkte zumindest teilweise verschieden sind.

2. Verfahren nach Anspruch 1, **dadurch gekennzeichnet, dass** ausschließlich die relativen Sendepositionen oder ausschließlich die relativen Empfangspositionen oder sowohl die relativen Sendepositionen als auch die relativen Empfangspositionen variiert werden.

3. Verfahren nach Anspruch 1 oder 2, **dadurch gekennzeichnet, dass** höchstens fünf und insbesondere zwei verschiedene relative Sendepositionen zum Aussenden der Radarpulse (P1, P2, ..., P5) und/oder höchstens fünf und insbesondere zwei verschiedene relative Empfangspositionen zum Empfang der Radarechos vorgegeben sind.

4. Verfahren nach einem der vorhergehenden Ansprüche, **dadurch gekennzeichnet, dass** sich die Sendzeitpunkte der Radarpulse (P1, P2, ..., P5) basierend auf einer Periode wiederholen, für welche vorbestimmte Sendezeitpunkte mit zumindest teilweise verschiedenen Zeitabständen zwischen den Sendezeitpunkten festgelegt sind.

5. Verfahren nach Anspruch 4, **dadurch gekennzeichnet, dass** die Variation der relativen Sendepositionen und/oder relativen Empfangspositionen für die Radarpulse (P1, P2, ..., P5) der sich wiederholenden Periode fest vorgegeben ist.

6. Verfahren nach einem der vorhergehende Ansprüche, **dadurch gekennzeichnet, dass** die relativen Sendepositionen und/oder die relativen Empfangspositionen basierend auf einem Kriterium einer hohen Signalgüte der Abtastungen, insbesondere eines niedrigen ISLR-Verhältnisses der Impuls-Antwort-Funktion und/oder eines niedrigen Rauschens, festgelegt sind.

7. Verfahren nach einem der vorhergehenden Ansprüche, **dadurch gekennzeichnet, dass** die relativen Empfangspositionen für Abtastungen, welche zu Radarechos unterschiedlicher Radarpulse (P1, P2, ..., P5) bei gleicher Range-Position gehören und/oder welche zu dem Radarecho des gleichen Radarpulses (P1, P2, ..., P5) für verschiedene Range-Positionen gehören, zumindest teilweise unterschiedlich sind.

8. Verfahren nach einem der vorhergehenden Ansprüche, **dadurch gekennzeichnet, dass** die relativen Empfangspositionen in Abhängigkeit von den Range-Positionen der Abtastungen derart variiert werden, dass die Abtastungen aller Range-Positionen eines Radarpulses (P1, P2, ..., P5) einen konstanten räumlichen Abstand in der Azimut-Richtung (y) zu den Abtastungen aller Range-Positionen des nächsten Radarpulses (P1, P2, ..., P5) aufweisen.

9. Verfahren nach einem der vorhergehenden Ansprüche, **dadurch gekennzeichnet, dass** im Falle, dass die Abtastungen keinen konstanten räumlichen Abstand in der Azimut-Richtung (y) aufweisen, hieraus Abtastungen mit konstantem räumlichem Abstand in der Azimut-Richtung (y) berechnet werden.

10. Verfahren nach einem der vorhergehenden Ansprüche, **dadurch gekennzeichnet, dass** die kombinierte Sende- und Empfangseinrichtung eine Phased-Array-Antenne ist.

11. Verfahren nach einem der vorhergehenden Ansprüche, **dadurch gekennzeichnet, dass** die Variation der relativen Sendepositionen und/oder Empfangspositionen durch eine Veränderung des Phasenzentrums der Sendeeinrichtung und/oder Empfangseinrichtung erreicht wird.

12. Synthetik-Apertur-Radarvorrichtung zur Fernerkundung der Erdoberfläche, umfassend ein Einzel-Apertur-Radarsystem auf einer Plattform, die sich im Betrieb der Radarvorrichtung in eine Azimut-Richtung (x) über der Erdoberfläche bewegt, wobei das Einzel-Apertur-Radarsystem eine kombinierte Sende- und Empfangseinrichtung umfasst, welche im Sendebetrieb eine Sendeeinrichtung (Tx) und im Empfangsbetrieb eine Empfangseinrichtung (Rx) darstellt, wobei die Sendeeinrichtung (Tx) und Empfangseinrichtung (Rx) derart ausgestaltet sind, dass
- durch die Sendeeinrichtung (Tx) zu aufeinander folgenden Sendezeitpunkten jeweils von einem Sendeort mit einer einzelnen relativen Sendeposition in Azimut-Richtung (x) in Bezug zur Plattform (SA) ein Radarpuls (P1, P2, ..., P5) ausgesendet wird, wobei die Zeitintervalle zwischen aufeinander folgenden Sendezeitpunkten variieren;
- die Radarechos der an der Erdoberfläche reflektierten Radarpulse (P1, P2, ..., P5) durch die Empfangseinrichtung (Rx) für jeweilige Empfangszeitpunkte an einem Empfangsort mit einer einzelnen relativen Empfangsposition in Azimut-Richtung (x) in Bezug zur Plattform (SA) gleichzeitig über mehrere Empfangskeulen mit unterschiedlichen Elevationswinkeln empfangen werden, wodurch Abtastungen erhalten werden, wobei eine jeweilige Abtastung einer Azimut-Position in der Azimut-Richtung (x) und einer Range-Position in einer Range-Richtung (y) zugeordnet ist, wobei die Range-Richtung (y) entlang der Erdoberfläche senkrecht zur Azimut-Richtung (x) verläuft;
**dadurch gekennzeichnet, dass**
die relativen Sendepositionen und/oder relativen Empfangspositionen in der Azimut-Richtung (x) variiert werden, so dass die relativen Sendepositionen in der Azimut-Richtung (x) für unterschiedliche Radarpulse (P1, P2, ..., P5) zumindest teilweise verschieden sind und/oder die relativen Empfangspositionen in der Azimut-Richtung (x) für unterschiedliche Empfangszeitpunkte zumindest teilweise verschieden sind.

13. Vorrichtung nach Anspruch 12, **dadurch gekennzeichnet, dass** die Vorrichtung zur Durchführung eines Verfahrens nach einem der Ansprüche 2 bis 11 ausgestaltet ist.

## Claims

1. A synthetic aperture radar method for remote sensing of the earth's surface using a single aperture radar system on a platform (SA), which moves in an azimuth direction (x) above the earth's surface, wherein the single aperture radar system comprises a combined transmission and reception device, which forms a transmission device (Tx) in the transmission mode and a reception device (Rx) in the reception mode, wherein:
- the transmission device (Tx) transmits a radar pulse (P1, P2, ..., P5) at successive transmission times, each time from one transmission location with a single relative transmission position in the azimuth direction (x) relative to the platform (SA), wherein the time intervals between successive transmission times vary;
- the radar echoes of the radar pulses (P1, P2, ..., P5) reflected off the earth's surface are received by the reception device (Rx), by way of several reception lobes with different elevation angles, simultaneously for each reception time at a reception location with a single relative reception position in the azimuth direction (x) relative to the platform (SA), thus obtaining samples, wherein a respective sample is assigned to an azimuth position in the azimuth direction (x) and to a range position in a range direction (y), wherein the range direction (y) extends along the earth's surface perpendicularly to the azimuth direction (x);
**characterized in that**
the relative transmission positions and/or the relative reception positions in the azimuth direction (x) are varied, so that the relative transmission positions in the azimuth direction (x) are at least partially different for different radar pulses (P1, P2, ..., P5) and/or the relative reception positions in the azimuth direction (x) are at least partially different for different reception times.

2. The method according to claim 1, **characterized in that** only the relative transmission positions or only the relative reception positions or both the relative transmission positions and the relative reception positions are varied.

3. The method according to claim 1 or 2, **characterized in that** at most five and in particular two different relative transmission positions for transmitting the radar pulses (P1, P2, ..., P5) and/or at most five and in particular two different relative reception positions for receiving the radar echoes are specified.

4. The method according to one of the preceding claims, **characterized in that** the transmission times of the radar pulses (P1, P2, ..., P5) are repeated based on a period, for which predetermined transmission times with at least partially different time intervals between the transmission times are determined.

5. The method according to claim 4, **characterized in that** the variation of the relative transmission positions and/or relative reception positions for the radar pulses (P1, P2, ..., P5) of the repeating period is fixed.

6. The method according to one of the preceding claims, **characterized in that** the relative transmission positions and/or the relative reception positions are defined based on a criterion for a high signal quality of the samples, in particular on a low ISLR ratio of the impulse response function and/or on a low noise.

7. The method according to one of the preceding claims, **characterized in that** the relative reception positions for samples, which belong to radar echoes of different radar pulses (P1, P2, ..., P5) with the same range position and/or which belong to the radar echo of the same radar pulse (P1, P2, ..., P5) with different range positions, are at least partially different.

8. The method according to one of the preceding claims, **characterized in that** the relative reception positions are varied as a function of the range positions of the samples in such a manner that the samples of all the range positions of a radar pulse (P1, P2, ..., P5) have a constant spatial interval in the azimuth direction (y) from the samples of all the range positions of the next radar pulse (P1, P2, ..., P5).

9. The method according to one of the preceding claims, **characterized in that** in a case, in which the samples do not have a constant spatial interval in the azimuth direction (y), samples with constant spatial intervals in the azimuth direction (y) are calculated therefrom.

10. The method according to one of the preceding claims, **characterized in that** the combined transmission and reception device is a phased array antenna.

11. The method according to one of the preceding claims, **characterized in that** the variation of the relative transmission positions and/or reception positions is achieved by a modification of the phase centre of the transmission device and/or reception device.

12. A synthetic aperture radar device for remote sensing of the earth's surface comprising a single aperture radar system on a platform (SA), which moves in an azimuth direction (x) above the earth's surface during the operation of the radar device, wherein the single aperture radar system comprises a combined transmission and reception device, which forms a transmission device (Tx) in the transmission mode and a reception device (Rx) in the reception mode, wherein the transmission device (Tx) and the reception device (Rx) are designed in such a manner that
- a radar pulse (P1, P2, ..., P5) is transmitted by the transmission device (Tx) at successive transmission times, each time from one transmission location with a single relative transmission position in the azimuth direction (x) relative to the platform (SA), wherein the time intervals between successive transmission times vary;
- the radar echoes of the radar pulses (P1, P2, ..., P5) reflected off the earth's surface are received by the reception device (4x), by way of several reception lobes with different elevation angles, simultaneously for each reception time at a reception location with a single relative reception position in the azimuth direction (x) relative to the platform (SA), thus obtaining samples, wherein a respective sample is assigned to an azimuth position in the azimuth direction (x) and to a range position in a range direction (y), wherein the range direction (y) extends along the earth's surface perpendicularly to the azimuth direction (x);
**characterized in that**
the relative transmission positions and/or the relative reception positions in the azimuth direction (x) are varied, so that the relative transmission positions in the azimuth direction (x) are at least partially different for different radar pulses (P1, P2, ..., P5) and/or the relative reception positions in the azimuth direction (x) are at least partially different for different reception times.

13. The device according to claim 12, **characterized in that** the device is designed for executing a method according to one of the claims 2 to 11.

## Revendications

1. Procédé de radar à synthèse d'ouverture pour la télédétection de la surface terrestre au moyen d'un système de radar à ouverture unique sur une plateforme (SA) qui se déplace au-dessus de la surface terrestre dans une direction azimutale (x), où le système radar à ouverture unique comprend un dispositif d'émission et de réception combiné qui forme un dispositif d'émission (Tx) lors de l'émission et un dispositif de réception (Rx) lors de la réception, où :
- une impulsion radar (P1, P2, ..., P5) est émise par le dispositif d'émission (Tx) à des instants d'émission successifs, respectivement à partir d'un lieu d'émission ayant une position d'émission relative unique dans la direction azimutale (x) par rapport à la plateforme (SA), où les intervalles de temps entre instants d'émission successifs varient ;
- les échos radar des impulsions radar (P1, P2, ..., P5) réfléchies par la surface terrestre sont reçus, à des instants de réception respectifs, par le dispositif de réception (Rx), par l'intermédiaire de plusieurs lobes de réception ayant des angles d'élévation différents simultanément, à un lieu de réception avec une position de réception relative unique dans la direction azimutale (x) par rapport à la plateforme (SA), moyennant quoi des scans sont obtenus, où un scan respectif est attribué à une position azimutale dans la direction azimutale (x) et à une position de portée dans une direction de portée (y), où la direction de portée (y) s'étend le long de la surface terrestre perpendiculairement à la direction azimutale (x) ;
**caractérisé en ce que**
les positions d'émission relatives et/ou les positions de réception relatives dans la direction azimutale (x) sont variées, de sorte que les positions d'émission relatives dans la direction azimutale (x) sont au moins partiellement différentes pour différentes impulsions radar (P1, P2, ..., P5) et/ou les positions de réception relatives dans la direction azimutale (x) sont au moins partiellement différentes pour différents instants de réception.

2. Procédé selon la revendication 1, **caractérisé en ce que** seules les positions d'émission relatives ou seules les positions de réception relatives ou aussi bien les positions d'émission relatives que les positions de réception relatives sont variées.

3. Procédé selon la revendication 1 ou 2, **caractérisé en ce qu'**au maximum cinq et en particulier deux positions d'émission relatives différentes pour émettre les impulsions radar (P1, P2, ..., P5) et/ou au maximum cinq et en particulier deux positions de réception relatives différentes pour recevoir les échos radar sont données.

4. Procédé selon l'une des revendications précédentes, **caractérisé en ce que** les instants d'émission des impulsions radar (P1, P2, ..., P5) se répètent sur la base d'une période pour laquelle sont fixés des instants d'émission prédéterminés avec des intervalles de temps au moins partiellement différents entre les instants d'émission.

5. Procédé selon la revendication 4, **caractérisé en ce que** la variation des positions d'émission relatives et/ou des positions de réception relatives pour les impulsions radar (P1, P2, ..., P5) de la période répétée est définie.

6. Procédé selon l'une des revendications précédentes, **caractérisé en ce que** les positions d'émission relatives et/ou les positions de réception relatives sont déterminées sur la base d'un critère de haute qualité de signal des scans, en particulier d'un rapport ISLR de la fonction impulsion/réponse faible et/ou d'un bruit faible.

7. Procédé selon l'une des revendications précédentes, **caractérisé en ce que** les positions de réception relatives pour des scans qui appartiennent à des échos radar de différentes impulsions radar (P1, P2, ..., P5) de même position de portée et/ou qui appartiennent à l'écho radar de la même impulsion radar (P1, P2, ..., P5) de positions de portée différentes sont au moins partiellement différentes.

8. Procédé selon l'une des revendications précédentes, **caractérisé en ce que** les positions de réception relatives sont variées en fonction des positions de portée des scans de telle manière que les scans de toutes les positions de portée d'une impulsion radar (P1, P2, ..., P5) présentent une séparation spatiale constante dans la direction azimutale (y) par rapport aux scans de toutes les positions de portée de l'impulsion radar suivante (P1, P2, ..., P5).

9. Procédé selon l'une des revendications précédentes, **caractérisé en ce que** dans un cas où les scans ne présentent pas de séparation spatiale constante dans la direction azimutale (y), des scans avec une séparation spatiale constante dans la direction azimutale (y) sont calculés à partir de ceux-ci.

10. Procédé selon l'une des revendications précédentes, **caractérisé en ce que** le dispositif d'émission et de réception combiné est une antenne réseau à commande de phase.

11. Procédé selon l'une des revendications précédentes, **caractérisé en ce que** la variation des positions d'émission relatives et/ou des positions de réception relatives est obtenue par une modification du centre de phase du dispositif d'émission et/ou du dispositif de réception.

12. Dispositif radar à synthèse d'ouverture pour la télédétection de la surface terrestre comportant un système de radar à ouverture unique sur une plateforme qui se déplace au-dessus de la surface terrestre dans une direction azimutale (x) pendant le fonctionnement du dispositif de radar, où le système radar à ouverture unique comprend un dispositif d'émission et de réception combiné qui forme un dispositif d'émission (Tx) lors de l'émission et un dispositif de réception (Rx) lors de la réception, où le dispositif d'émission (Tx) et le dispositif de réception (Rx) sont conçus de telle manière que
- une impulsion radar (P1, P2, ..., P5) est émise par le dispositif d'émission (Tx) à des instants d'émission successifs, respectivement à partir d'un lieu d'émission ayant une position d'émission relative unique dans la direction azimutale (x) par rapport à la plateforme (SA), où les intervalles de temps entre instants d'émission successifs varient ;
- les échos radar des impulsions radar (P1, P2, ..., P5) réfléchies par la surface terrestre sont reçus, à des instants de réception respectifs, par le dispositif de réception (Rx), par l'intermédiaire de plusieurs lobes de réception ayant des angles d'élévation différents simultanément, à un lieu de réception avec une position de réception relative unique dans la direction azimutale (x) par rapport à la plateforme (SA), moyennant quoi des scans sont obtenus, où un scan respectif est attribué à une position azimutale dans la direction azimutale (x) et à une position de portée dans une direction de portée (y), où la direction de portée (y) s'étend le long de la surface terrestre perpendiculairement à la direction azimutale (x) ;
**caractérisé en ce que**
les positions d'émission relatives et/ou les positions de réception relatives dans la direction azimutale (x) sont variées, de sorte que les positions d'émission relatives dans la direction azimutale (x) sont au moins partiellement différentes pour différentes impulsions radar (P1, P2, ..., P5) and/ou les positions de réception relatives dans la direction azimutale (x) sont au moins partiellement différentes pour différents instants de réception.

13. Dispositif selon la revendication 12, **caractérisé en ce que** le dispositif est conçu pour la mise en oeuvre du procédé selon l'une des revendications 2 à 11.
